(19) Europäisches Patentamt
European Patent Office
Office européen des brevets

(11) **EP 2 489 859 B1**

(12) **EUROPEAN PATENT SPECIFICATION**

(45) Date of publication and mention
of the grant of the patent:
**25.11.2020 Bulletin 2020/48**

(51) Int Cl.:
*F02C 9/20* *(2006.01)*    *F02C 9/28* *(2006.01)*
*F02C 9/54* *(2006.01)*    *F02K 1/17* *(2006.01)*

(21) Application number: **11250191.1**

(22) Date of filing: **18.02.2011**

(54) **Free gas turbine with constant temperature-corrected gas generator speed**

Gasturbine mit konstanter Temperatur-korrigierter Gasgeneratordrehzahl

Turbine à gaz avec vitesse de rotation du générateur de gaz corrigée à température constante

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.08.2012 Bulletin 2012/34**

(73) Proprietor: **Pratt & Whitney Canada Corp.
Longueuil, Québec J4G 1A1 (CA)**

(72) Inventors:
• **Morgan, Keith
Westmount QC H3Y 3G3 (CA)**

• **Belleville, François
Varennes QC J3X 1R4 (CA)**

(74) Representative: **Dehns
St. Bride's House
10 Salisbury Square
London EC4Y 8JD (GB)**

(56) References cited:
**EP-A1- 0 363 301    EP-A2- 2 143 908
EP-B1- 0 279 487    DE-A1- 2 654 864
GB-A- 1 313 841    GB-A- 2 387 415**

## Description

### TECHNICAL FIELD

The application relates generally to power and rotational speed control of a gas turbine engine and, more particularly, to the control of the rotational speed of the main shafts or spools in a free gas turbine engine.

### BACKGROUND OF THE ART

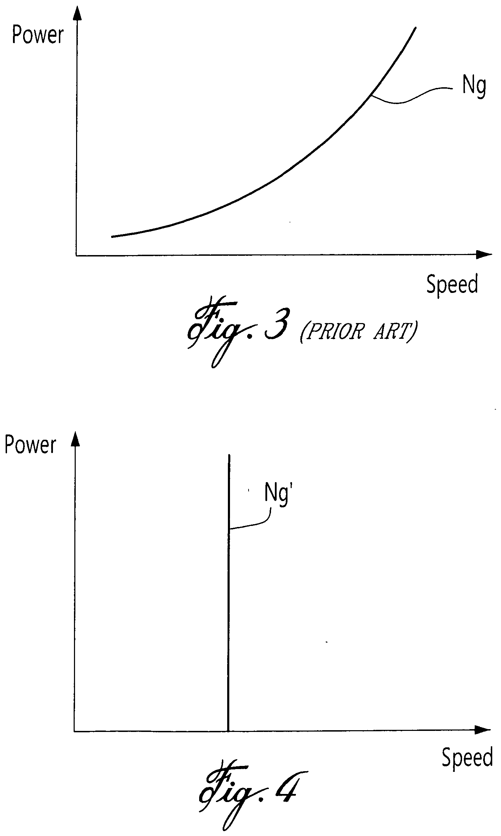

In a conventional free gas turbine engine, the rotational speed Ng of the high pressure or gas generator spool usually varies in a fixed relationship with the engine power or thrust, as can be seen in Fig. 3. Inlet guide vanes are typically controlled to a predetermined position as a function of the Ng rotational speed. For gas turbine engine applications where the rotational speed Np of the low pressure or power turbine spool is maintained constant (e.g. turbo shafts), a controller usually maintains the Np rotational speed constant through a modulation of the fuel flow and as such reacts to any changes in Np rotational speed due to a change in the load applied to the power turbine. For gas turbine engine application where the rotational speed Np of the low pressure or power turbine spool is changing with thrust demand (e. g. turbofans), the Np rotational speed is controlled at the commanded reference speed through a modulation of fuel flow.

However, improvements are desirable.

Examples of known two spool gas turbine engines are described in EP-A-0363301, EP-A-2143908, EP-B-0279487, DE-A-2654864, GB-A-1313841 and GB-A-2387415. EP-A-0363301 discloses a control system for a two-spool gas turbine engine where in order to obtain a rapid thrust response in transient power situations, the high pressure spool speed corrected for its inlet conditions is kept constant by adjusting the angle of the high pressure compressor variable vanes, while the low pressure spool is allowed to adjust speed to a value corresponding to the targeted thrust. GB-A-1313841 discloses a three-spool gas turbine where the intermediate and high pressure spools run at substantially constant inlet temperature corrected rotational speed, whereas the rotational speed of the low pressure spool is controlled by variable turbine guide vanes and by the area of the exhaust nozzle.

### SUMMARY

In one aspect, there is provided a method of controlling a speed of a gas turbine engine throughout a power demand variation thereon as claimed in claim 1.

In a further aspect, there is provided a gas turbine engine as claimed in claim 5.

### DESCRIPTION OF THE DRAWINGS

Reference is now made to the accompanying figures in which:

Fig. 1 is a schematic cross-sectional view of a gas turbine engine;

Fig. 2 is a schematic diagram of a control system used to control the rotational speed of spools of a gas turbine engine such as shown in Fig. 1;

Fig. 3 illustrates a relationship between power demand and rotational speed for a high pressure spool of a gas turbine engine of the prior art;

Fig. 4 illustrates a relationship between power demand and rotational speed for a high pressure spool of a gas turbine engine controlled through a control system such as shown in Fig. 2; and

Fig. 5 is a schematic cross-sectional view of another type of gas turbine engine.

### DETAILED DESCRIPTION

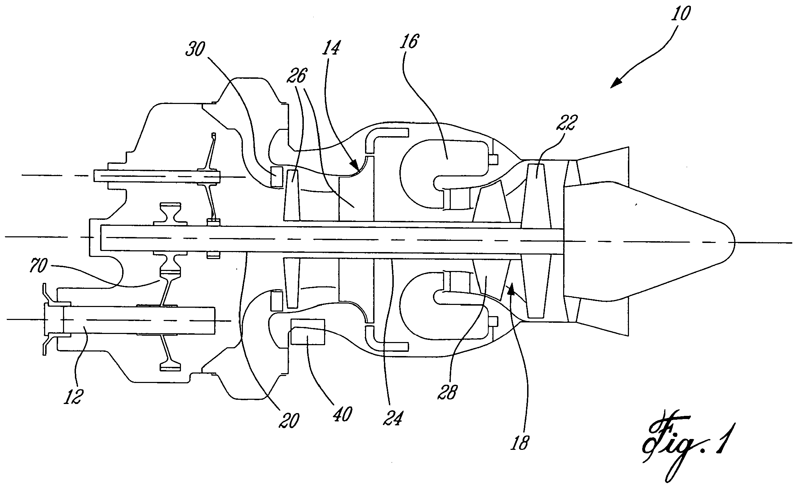

Fig.1 illustrates a turbo shaft gas turbine engine 10 of a type preferably provided for use in subsonic flight, generally comprising in serial flow communication a compressor section 14 for pressurizing the air, a combustor 16 in which the compressed air is mixed with fuel and ignited for generating an annular stream of hot combustion gases, and a turbine section 18 for extracting energy from the combustion gases.

The engine 10 includes a low pressure/ power turbine shaft or spool 20 supporting the rotor(s) 22 of the low pressure portion of the turbine section 18. The low pressure spool 20 also rotates, through a reduction gearbox 70, a propeller shaft 12 supporting a propeller (not shown).

The engine 10 also includes a high pressure/gas generator shaft or spool 24 supporting the rotor(s) 26 of a high pressure portion of the compressor section 14 and the rotor(s) 28 of a high pressure portion of the turbine section 18. The low pressure and high pressure spools 20, 24 are concentric and rotate independently from one another.

The engine 10 also includes variable inlet guide vanes 30 positioned upstream of the high pressure portion of the compressor section 14.

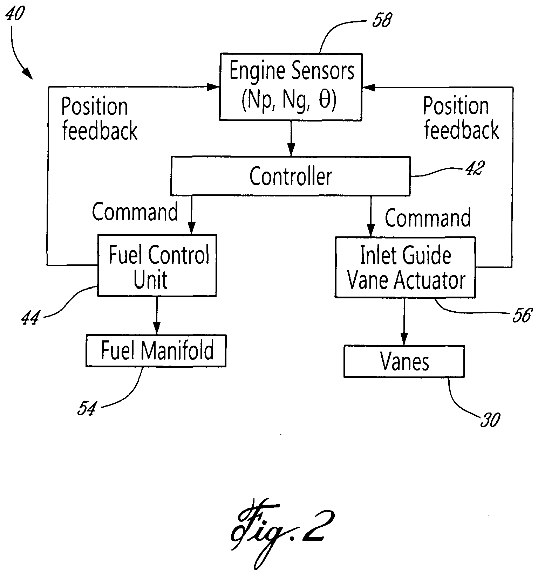

Referring to Fig. 2, the engine 10 includes a control system 40 including at least one controller 42 which controls the rotational speed of the low and high pressure spools 20, 24. The controller 42 thus receives relevant data from engine sensors 58, including the rotational speed Np of the low pressure spool 20, the rotational speed Ng of the high pressure spool 24, and the temperature θ outside of the engine 10. In the embodiment shown, a single controller 42 controls both spools 20, 24, although alternatively different controllers can be provided.

The controller 42 controls the rotational speed of the low pressure spool 20 by sending a command signal to a fuel control unit 44, which controls the flow of fuel through a manifold 54 delivering the fuel to the combustor. The controller 42 receives a feedback signal from the fuel control unit 44 indicative of the fuel flow through the manifold 54.

In a particular embodiment, the fuel control unit 44 includes a servo pressure regulator which provides fuel to a metering valve controller at a regulated pressure determined by the controller 42. The controller 42 controls the position of a metering valve through the metering valve controller. The metering valve may include, for example, a piston moved by fuel pressure on each side, with the fuel pressure being provided by the metering valve controller as requested by the controller 42. The position of the metering valve determines the fuel flow provided to the fuel manifold(s) 54 of the gas turbine engine 10.

The controller 42 controls the rotational speed of the high pressure spool 24 by sending a command signal to an inlet guide vane actuator 56, which controls the orientation of the inlet guide vanes 30. The controller 42 receives a feedback signal from the inlet guide vane actuator 56 indicative of the orientation of the inlet guide vanes 30.

In a particular embodiment, the vane actuator 56 includes a piston moved by fuel pressure on each side, with the fuel pressure being provided by a vane controller as requested by the controller 42. The vane actuator 56 moves the variable inlet guide vanes 30, for example through rings (not shown) transferring the linear movement of the actuator 56 into a rotational movement for the vanes 30. An example of a connection between the actuator and the guide vanes is shown in U.S. Patent No. 4,890,977. It is to be understood that any adequate type of connection between the guide vanes 30 and the actuator 56 can alternatively be used.

Thus, the controller 42 controls the rotational speed Np of the low pressure spool 20 through a modulation of the fuel flow, by acting on the fuel control unit 44. The controller also controls the rotational speed Ng of the high pressure spool 24 through a modulation of the angle of the variable inlet guide vanes 30, by acting on the vane actuator 56. The controller 42 thus controls the rotational speed of the two spools 20, 24 independently from one another.

It is understood that any other adequate type of control system can be provided, depending on the type of metering valve and guide vane actuator provided. For example, one or both of the metering valve and guide vane actuator may be electrically actuable instead of fuel-pressure operated, and the controller may thus control them directly through an electrical signal.

The controller 42 controls the rotational speed Np of the low pressure spool 20 such that it remains at least substantially constant throughout a range of a power demand on the gas turbine engine 10, and preferably throughout the complete range of power demand, i.e. from 0 to a maximum power available. In the present application, "substantially constant" includes a variation within a range of approximately 5% of the nominal value.

The controller 42 controls the rotational speed Ng of the high pressure spool 24 according to a fixed relationship with respect to the outside air temperature θ and throughout the variation of power demand on the gas turbine engine 10.

Referring to Fig. 4, according to the invention, the controller 42 maintains a temperature-corrected rotational speed Ng' of the high pressure spool 24 at least substantially constant throughout the range of the power demand on the gas turbine engine 10, and preferably throughout the complete range of the power demand on the engine, i.e. from 0 to a maximum power available. The controller 42 determines the temperature-corrected rotational speed Ng' based on the actual rotational speed Ng of the high pressure spool 24 and on the outside air temperature θ as indicated by the appropriate sensor 58.

In a particular embodiment, the temperature-corrected rotational speed Ng' is defined as $Ng/\sqrt{\theta}$.

In use, when the power demand increases on the power turbine, the rotational speed Np of the low pressure spool 20 starts to decrease. In response, the controller 42 commands the fuel flow to increase through the fuel control unit 44 such as to bring the rotational speed Np of the low pressure spool 20 back to the desired constant value. However, as the fuel flow increases, the rotational speed Ng of the high pressure spool 24 and its temperature-corrected value Ng' start to increase. In response, the controller 42 commands the inlet guide vanes 30 to open through the inlet guide vane actuator 56 such as to reduce the rotational speed Ng of the high pressure spool 24 and bring its temperature-corrected value Ng' back to the desired constant value while maintaining power.

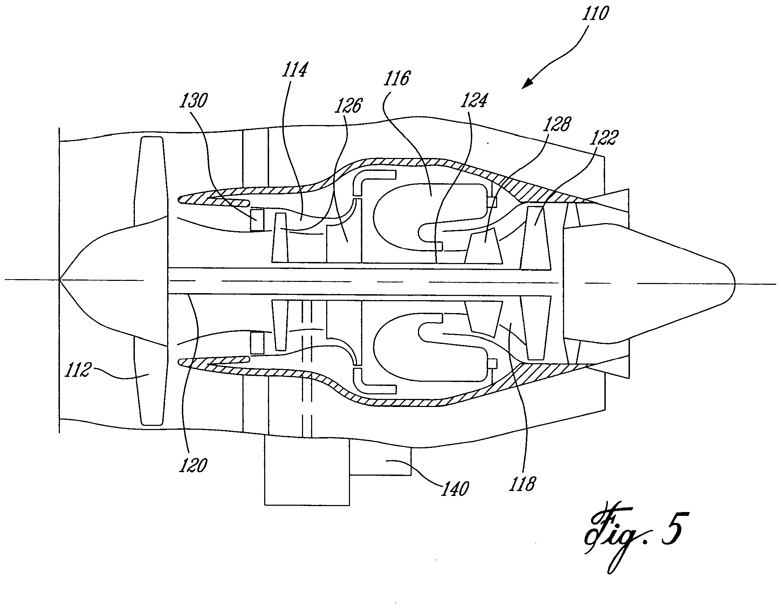

Fig. 5 illustrates another embodiment of a gas turbine engine 110. The turbofan engine 110 comprises in serial flow communication a fan 112 through which ambient air is propelled, a compressor section 114 for pressurizing the air, a combustor 116 in which the compressed air is mixed with fuel and ignited for generating an annular stream of hot combustion gases, and a turbine section 118 for extracting energy from the combustion gases.

The engine 110 includes a low pressure/power turbine shaft or spool 120 supporting the fan 112 and the rotor(s) 122 of the low pressure portion of the turbine section 118. The engine 110 also includes a high pressure/gas generator shaft or spool 124 supporting the rotor(s) 126 of a high pressure portion of the compressor section 114 and the rotor(s) 128 of a high pressure portion of the turbine section 118. The low pressure and high pressure spools 120, 124 are concentric and rotate independently from one another.

The engine 110 also includes variable inlet guide vanes 130 positioned upstream of the high pressure portion of the compressor section 114.

The engine 110 further includes a control system 140 which controls the rotational speed of the high and low pressure spools 120, 124. The control system 140 is similar to the control system 40 of the previous embodiment.

As above, the control system 140 controls a rotational speed Ng of the high pressure spool 124 according to a fixed relationship with respect to the outside air temperature throughout the variation of output power. The rotational speed Ng of the high pressure spool 124 is controlled such that a corrected value of the rotational speed Ng' of the high pressure spool 124, determined based on the outside air temperature θ, remains at least substantially constant throughout the variation of output power.

As above, in a particular embodiment, the corrected value of the rotational speed Ng' of the high pressure spool 124 is calculated as $Ng/\sqrt{\theta}$.

The above described control of the rotational speed of the high pressure spool 120, 124 may provide improvements in engine operability and result in rapid augmentation and reduction of delivered power, which may improve response times over a conventional two spool free turbine engine.

The above description is meant to be exemplary only, and one skilled in the art will recognize that changes may be made to the embodiments described without departing from the scope of the invention disclosed. For example, the described control method is not limited to the specific gas turbine engines shown and can be used in any type of free gas turbine engine including various configurations of APUs, turbofans, turboprops and turboshafts. Still other modifications which fall within the scope of the present invention will be apparent to those skilled in the art, in light of a review of this disclosure, and such modifications may fall within the scope of the invention, which is defined by the appended claims.

**Claims**

1. A method of controlling a speed of a gas turbine engine (10, 110) throughout a variation of output power thereof, the gas turbine engine including a gas generator spool (24, 124) and a power turbine spool (20, 120) rotating independently from one another, and a controller (42), the method comprising:

    controlling a rotational speed (Ng) of the gas generator spool (24, 124) according to a fixed relationship with respect to an air temperature measured outside of the gas turbine engine (10, 110) throughout the variation of output power, the rotational speed (Ng) of the gas generator spool (24, 124) being controlled by modulating an angle of variable inlet guide vanes (30, 130) located upstream of a compressor (14, 114) having at least one rotor (28, 128) rotating with the gas generator spool (24, 124), such that a corrected value (Ng') of the rotational speed of the gas generator spool (24, 124) remains at least substantially constant throughout the variation of output power, the corrected value (Ng') being determined based on the rotational speed (Ng) of the gas generator spool (24, 124) and the air temperature (θ) measured outside of the gas turbine engine (10, 110); and

    controlling a rotational speed (Np) of the power turbine spool (20, 120) to remain at least substantially constant throughout the variation of output power by modulating a fuel flow of the gas turbine engine (10, 110),

    wherein, in use, when the power demand increases on the gas turbine engine and the rotational speed (Np) of the power turbine spool (20, 120) starts to decrease, the controller (42), in response, commands the fuel flow to increase through a fuel control unit (44) such as to bring the rotational speed (Np) of the power turbine spool (20, 120) back to the desired constant value, wherein as the fuel flow increases and the rotational speed (Ng) of the gas generator spool (24, 124) and its temperature-corrected value (Ng') start to increase, the controller (42), in response, commands inlet guide vanes (30) to open through an inlet guide vane actuator (56) such as to reduce the rotational speed (Ng) of the gas generator spool (24, 124) and bring the temperature-corrected value (Ng') back to the desired constant value while maintaining power.

2. The method as defined in claim 1, wherein the corrected value is calculated as $Ng/\sqrt{\theta}$, where Ng is the rotational speed of the gas generator spool (24, 124) and θ is the air temperature measured outside of the gas turbine engine (10, 110).

3. The method as defined in claim 1 or 2, wherein the corrected value of the rotational speed of the gas generator spool (24, 124) is maintained at least substantially constant independently of a rotational speed of the power turbine spool (20, 120).

4. The method as defined in claim 1, 2 or 3, wherein the corrected value of the rotational speed of the gas generator spool (24, 124) is maintained at least substantially constant while the power output varies from 0 to a maximum power available from the gas turbine engine (10, 110).

5. A gas turbine engine (10, 110) comprising:

a low pressure spool (20, 120) supporting at least one rotor (22, 122) of a low pressure turbine;
a high pressure spool (24, 124) supporting at least one rotor (28, 128) of a high pressure turbine located upstream of the low pressure turbine rotor (22, 122) and at least one rotor (26, 126) of a high pressure compressor located upstream of the high pressure turbine, the low and high pressure spools (20, 120; 24, 124) being rotatable independently from one another; and
at least one controller (42) adapted to control a rotation of the low pressure spool (20, 120) to rotate at an at least substantially constant speed (Np) throughout a range of a power demand on the gas turbine engine (10, 110) by modulating a fuel flow of the gas turbine engine (10, 110) throughout the range of the power demand, and adapted to control the high pressure spool (24, 124) to rotate at a rotational speed (Ng) having an at least substantially constant temperature-corrected value (Ng') throughout the range of the power demand on the gas turbine engine (10, 110) by modulating an angle of variable inlet guide vanes (30, 130) located upstream of the high pressure compressor throughout the range of the power demand, the temperature-corrected value being determined based on the rotational speed of the high pressure spool (24, 124) and an air temperature ($\theta$) measured outside of the gas turbine engine (10, 110), such that, in use, when the power demand increases on the gas turbine engine and the rotational speed (Np) of the low pressure spool (20, 120) starts to decrease, the controller (42), in response, commands the fuel flow to increase through a fuel control unit (44) such as to bring the rotational speed (Np) of the low pressure spool (20, 120) back to the desired constant value, wherein as the fuel flow increases and the rotational speed (Ng) of the high pressure spool (24, 124) and its temperature-corrected value (Ng') start to increase, the controller (42), in response, commands inlet guide vanes (30) to open through an inlet guide vane actuator (56) such as to reduce the rotational speed (Ng) of the high pressure spool (24, 124) and bring the temperature-corrected value (Ng') back to the desired constant value while maintaining power.

6. The gas turbine engine as defined in claim 5, wherein the at least one controller (42) is adapted to determine the temperature-corrected value of the rotational speed of the high pressure spool (24, 124) as $Ng/\sqrt{\theta}$, where Ng is the rotational speed of the high pressure spool (24, 124) and $\theta$ is the temperature measured outside of the gas turbine engine (10, 110).

7. The gas turbine engine as defined in claim 5 or 6, wherein the range of the power demand throughout which the at least one controller (42) controls the high pressure spool (24, 124) to have a rotational speed having the at least substantially constant temperature-corrected value extends from zero to a maximum available power from the gas turbine engine (10, 110).

8. The gas turbine engine as defined in claim 5, 6 or 7, wherein the at least one controller (42) is adapted to control the rotation of the high and low pressure spools (24, 124; 20, 120) in an independent manner.

**Patentansprüche**

1. Verfahren zum Steuern einer Drehzahl eines Gasturbinentriebwerks (10, 110) über unterschiedliche Ausgabeleistungen, wobei das Gasturbinentriebwerk eine Gasgeneratorwelle (24, 124) und eine Leistungsturbinenwelle (20, 120), die sich unabhängig voneinander drehen, und eine Steuerung (42) beinhaltet, wobei das Verfahren Folgendes umfasst:

Steuern einer Drehzahl (Ng) der Gasgeneratorwelle (24, 124) gemäß einem festen Verhältnis in Bezug auf eine außerhalb des Gasturbinentriebwerks (10, 110) gemessene Lufttemperatur über die unterschiedlichen Ausgabeleistungen, wobei die Drehzahl (Ng) der Gasgeneratorwelle (24, 124) gesteuert wird, indem ein Winkel variabler Einlassleitschaufeln (30, 130) moduliert wird, die sich stromaufwärts eines Verdichters (14, 114) befinden, der mindestens ein Laufrad (28, 128) aufweist, das sich mit der Gasgeneratorwelle (24, 124) dreht, derart, dass ein korrigierter Wert (Ng') der Drehzahl der Gasgeneratorwelle (24, 124) über die unterschiedlichen Ausgabeleistungen im Wesentlichen konstant bleibt, wobei der korrigierte Wert (Ng') auf Grundlage der Drehzahl (Ng) der Gasgeneratorwelle (24, 124) und der außerhalb des Gasturbinentriebwerks (10, 110) gemessenen Lufttemperatur ($\theta$) bestimmt wird; und
Steuern einer Drehzahl (Np) der Leistungsturbinenwelle (20, 120) derart, dass sie über die unterschiedlichen Ausgabeleistungen im Wesentlichen konstant bleibt, durch Modulieren eines Kraftstoffstroms des Gasturbinentriebwerks (10, 110),
wobei die Steuerung (42) bei Gebrauch, wenn mehr Leistung von dem Gasturbinentriebwerk angefordert wird und die Drehzahl (Np) der Leistungsturbinenwelle (20, 120) abzunehmen beginnt, als Reaktion darauf eine Erhöhung des Kraftstoffstroms über eine Kraftstoffsteuereinheit (44) anweist, um so die Drehzahl (Np) der Leistungsturbinenwellen (20, 120) zurück zu dem gewünschten konstanten Wert zu bringen, wobei die Steuerung (42), wenn der Kraftstoffstrom zunimmt und die Drehzahl (Ng) der Gasgeneratorwelle (24, 124) und deren Temperatur-korrigierter Wert (Ng') zuzunehmen beginnen, als Reaktion darauf, ein Öffnen der Einlassleitschaufeln (30) über einen Einlassleitschaufelaktor (56) anweist, um so die Drehzahl (Ng) der Gasgeneratorwelle (24, 124) zu reduzieren und den Temperatur-korrigierten Wert (Ng') zurück zu dem gewünschten konstanten Wert zu bringen, während die Leistung aufrechterhalten wird.

2. Verfahren nach Anspruch 1, wobei der korrigierte Wert als $Ng/\sqrt{\theta}$ berechnet wird, wobei Ng für die Drehzahl der Gasgeneratorwelle (24, 124) steht und $\theta$ für die außerhalb des Gasturbinentriebwerks (10, 110) gemessene Lufttemperatur steht.

3. Verfahren nach Anspruch 1 oder 2, wobei der korrigierte Wert der Drehzahl der Gasgeneratorwelle (24, 124) unabhängig von einer Drehzahl der Leistungsturbinenwelle (20, 120) zumindest im Wesentlichen konstant gehalten wird.

4. Verfahren nach Anspruch 1, 2 oder 3, wobei der korrigierte Wert der Drehzahl der Gasgeneratorwelle (24, 124) zumindest im Wesentlichen konstant gehalten wird, während die Ausgabeleistung von 0 bis zu einer maximal von dem Gasturbinentriebwerk (10, 110) verfügbaren Leistung variiert.

5. Gasturbinentriebwerk (10, 110), umfassend:

   eine Niederdruckwelle (20, 120), die mindestens ein Laufrad (22, 122) einer Niederdruckturbine trägt;
   eine Hochdruckwelle (24, 124), die mindestens ein Laufrad (28, 128) einer Hochdruckturbine, das sich stromaufwärts des Laufrads (22, 122) der Niederdruckturbine befindet, und mindestens ein Laufrad (26, 126) eines Hochdruckverdichters, der sich stromaufwärts der Hochdruckturbine befindet, trägt, wobei sich die Nieder- und die Hochdruckwelle (20, 120; 24, 124) unabhängig voneinander drehen; und
   mindestens eine Steuerung (42), die dazu ausgelegt ist, eine Drehung der Niederdruckwelle (20, 120) derart zu steuern, dass sie sich über einen Bereich einer von dem Gasturbentrieb-

werk (10, 110) angeforderten Leistung mit einer im Wesentlichen konstanten Drehzahl (Np) dreht, indem ein Kraftstoffstrom des Gasturbinentriebwerks (10, 110) über den Bereich der angeforderten Leistung moduliert wird, und dazu ausgelegt ist, die Hochdruckwelle (24, 124) derart zu steuern, dass sie sich über den Bereich der von dem Gasturbinentriebwerk (10, 110) angeforderten Leistung mit einer Drehzahl (Ng) dreht, die einen zumindest im Wesentlichen konstanten Temperatur-korrigierten Wert (Ng') aufweist, indem ein Winkel variabler Einlassleitschaufeln (30, 130), die sich stromaufwärts des Hochdruckverdichters befinden, über den Bereich der angeforderten Leistung moduliert wird, wobei der Temperaturkorrigierte Wert auf Grundlage der Drehzahl der Hochdruckwelle (24, 124) und einer außerhalb des Gasturbinentriebwerks (10, 110) gemessenen Lufttemperatur ($\theta$) bestimmt wird, derart, dass die Steuerung (42) bei Gebrauch, wenn die von dem Gasturbinentriebwerk angeforderte Leistung zunimmt und die Drehzahl (Np) der Niederdruckwelle (20, 120) abzunehmen beginnt, als Reaktion darauf eine Erhöhung des Kraftstoffstroms über eine Kraftstoffsteuereinheit (44) anweist, um so die Drehzahl (Np) der Niederdruckwelle (20, 120) zurück zu dem gewünschten konstanten Wert zu bringen, wobei die Steuerung (42), wenn der Kraftstoffstrom zunimmt und die Drehzahl (Ng) der Hochdruckwelle (24, 124) und deren Temperatur-korrigierter Wert (Ng') zuzunehmen beginnen, als Reaktion darauf ein Öffnen der Einlassleitschaufeln (30) über einen Einlassleitschaufelaktor (56) anweist, um so die Drehzahl (Ng) der Hochdruckwelle (24, 124) zu reduzieren und den Temperatur-korrigierten Wert (Ng') zurück zu dem gewünschten konstanten Wert zu bringen, während die Leistung aufrechterhalten wird.

6. Gasturbinentriebwerk nach Anspruch 5, wobei die mindestens eine Steuerung (42) dazu ausgelegt ist, den Temperatur-korrigierten Wert der Drehzahl der Hochdruckwelle (24, 124) als $Ng/\sqrt{\theta}$ zu bestimmen, wobei Ng für die Drehzahl der Hochdruckwelle (24, 124) steht und $\theta$ für die außerhalb des Gasturbinentriebwerks (10, 110) gemessene Temperatur steht.

7. Gasturbinentriebwerk nach Anspruch 5 oder 6, wobei sich der Bereich der angeforderten Leistung, über den die mindestens eine Steuerung (42) die Hochdruckwelle (24, 124) derart steuert, dass sie eine Drehzahl aufweist, die einen zumindest im Wesentlichen konstanten Temperatur-korrigierten Wert aufweist, von null bis zu einer maximal von dem Gasturbinentriebwerk (10, 110) verfügbaren Leistung erstreckt.

**8.** Gasturbinentriebwerk nach Anspruch 5, 6 oder 7, wobei die mindestens eine Steuerung (42) dazu ausgelegt ist, die Drehung der Hoch- und der Niederdruckwelle (24, 124; 20, 120) unabhängig voneinander zu steuern.

**Revendications**

**1.** Procédé de commande d'une vitesse d'un moteur à turbine à gaz (10, 110) à travers une variation de puissance de sortie de celui-ci, le moteur à turbine à gaz comportant une une bobine de générateur de gaz (24, 124) et une bobine de turbine de puissance (20, 120) tournant indépendamment l'une de l'autre, et un dispositif de commande (42), le procédé comprenant :

la commande d'une vitesse de rotation (Ng) de la bobine de générateur de gaz (24, 124) selon une relation fixe par rapport à une température d'air mesurée à l'extérieur du moteur à turbine à gaz (10, 110) pendant toute la variation de puissance de sortie, la vitesse de rotation (Ng) de la bobine de générateur de gaz (24, 124) étant commandée en modulant un angle d'aubes directrices d'entrée variables (30, 130) situées en amont d'un compresseur (14, 114) ayant au moins un rotor (28, 128) tournant avec la bobine de générateur de gaz (24, 124), de sorte qu'une valeur corrigée (Ng') de la vitesse de rotation de la bobine de générateur de gaz (24, 124) reste au moins sensiblement constante pendant toute la variation de la puissance de sortie, la valeur corrigée (Ng') étant déterminée sur la base de la vitesse de rotation (Ng) de la bobine de générateur de gaz (24, 124) et la température d'air (9) étant mesurée à l'extérieur du moteur à turbine à gaz (10, 110) ; et
la commande d'une vitesse de rotation (Np) de la bobine de turbine de puissance (20, 120) pour qu'elle reste au moins sensiblement constante pendant toute la variation de la puissance de sortie en modulant un débit de carburant du moteur à turbine à gaz (10, 110),
dans lequel, en utilisation, lorsque la demande de puissance augmente sur le moteur à turbine à gaz et que la vitesse de rotation (Np) de la bobine de turbine de puissance (20, 120) commence à diminuer, le dispositif de commande (42), en réponse, commande le débit de carburant pour qu'il augmente à travers une unité de commande de carburant (44) de manière à ramener la vitesse de rotation (Np) de la bobine de turbine de puissance (20, 120) à la valeur constante souhaitée, dans lequel lorsque le débit de carburant augmente et que la vitesse de rotation (Ng) de la bobine de générateur de gaz (24, 124) et sa valeur corrigée en température (Ng') commencent à augmenter, le dispositif de commande (42), en réponse, commande à des aubes directrices d'entrée (30) de s'ouvrir à travers un actionneur d'aube directrice d'entrée (56) de manière à réduire la vitesse de rotation (Ng) de la bobine de générateur de gaz (24, 124) et ramener la valeur corrigée en température (Ng') à la valeur constante souhaitée tout en maintenant la puissance.

**2.** Procédé selon la revendication 1, dans lequel la valeur corrigée est calculée en tant que $Ng/\sqrt{\theta}$, où Ng est la vitesse de rotation de la bobine de générateur de gaz (24, 124) et $\theta$ est la température d'air mesurée à l'extérieur du moteur à turbine à gaz (10, 110).

**3.** Procédé selon la revendication 1 ou 2, dans lequel la valeur corrigée de la vitesse de rotation de la bobine de générateur de gaz (24, 124) est maintenue au moins sensiblement constante indépendamment d'une vitesse de rotation de la bobine de turbine de puissance (20, 120).

**4.** Procédé selon la revendication 1, 2 ou 3, dans lequel la valeur corrigée de la vitesse de rotation de la bobine de générateur de gaz (24, 124) est maintenue au moins sensiblement constante pendant que la puissance de sortie varie de 0 à une puissance maximale disponible depuis le moteur à turbine à gaz (10, 110).

**5.** Moteur à turbine à gaz (10, 110) comprenant :

une bobine basse pression (20, 120) soutenant au moins un rotor (22, 122) d'une turbine basse pression ;
une bobine haute pression (24, 124) soutenant au moins un rotor (28, 128) d'une turbine haute pression située en amont du rotor de turbine basse pression (22, 122) et au moins un rotor (26, 126) d'un compresseur haute pression situé en amont de la turbine haute pression, les bobines basse et haute pression (20, 120 ; 24, 124) pouvant tourner indépendamment l'une de l'autre ; et au moins un dispositif de commande (42) conçu pour commander une rotation de la bobine basse pression (20, 120) afin qu'elle tourne à une vitesse au moins sensiblement constante (Np) à travers une plage d'une demande de puissance sur le moteur à turbine à gaz (10, 110) en modulant un débit de carburant du moteur à turbine à gaz (10, 110) à travers la plage de la demande de puissance, et conçu pour commander la bobine haute pression (24, 124) afin qu'elle tourne à une vitesse de rotation (Ng) ayant une valeur corrigée en température au moins sensiblement constante (Ng') à travers la plage de la demande de puissance sur le moteur à turbine à gaz (10, 110) en modulant un angle d'aubes directrices d'entrée variables (30, 130) situées en amont du compresseur haute pression à travers la plage de la demande de puissance, la valeur corrigée en température étant déterminée sur la base de la vitesse de rotation de la bobine haute pression (24, 124) et une température d'air (9) étant mesurée à l'extérieur du moteur à turbine à gaz (10, 110), de sorte que, en utilisation, lorsque la demande de puissance augmente sur le moteur à turbine à gaz et que la vitesse de rotation (Np) de la bobine basse pression (20, 120) commence à diminuer, le dispositif de commande (42), en réponse, commande le débit de carburant pour qu'il augmente à travers une unité de commande de carburant (44) de manière à ramener la vitesse de rotation (Np) de la bobine basse pression (20, 120) à la valeur constante souhaitée, dans lequel lorsque le débit de carburant augmente et que la vitesse de rotation (Ng) de la bobine haute pression (24, 124) et sa valeur corrigée en température (Ng') commencent à augmenter, le dispositif de commande (42), en réponse, commande à des aubes directrices d'entrée (30) de s'ouvrir à travers un actionneur d'aube directrice d'entrée (56) de manière à réduire la vitesse de rotation (Ng) de la bobine haute pression (24, 124) et ramener la valeur corrigée en température (Ng') à la valeur constante souhaitée tout en maintenant la puissance.

6. Moteur à turbine à gaz selon la revendication 5, dans lequel l'au moins un dispositif de commande (42) est conçu pour déterminer la valeur corrigée en température de la vitesse de rotation de la bobine haute pression (24, 124) en tant que $Ng/\sqrt{\theta}$, où Ng est la vitesse de rotation de la bobine haute pression (24, 124) et $\theta$ est la température mesurée à l'extérieur du moteur à turbine à gaz (10, 110).

7. Moteur à turbine à gaz selon la revendication 5 ou 6, dans lequel la plage de la demande de puissance à travers laquelle l'au moins un dispositif de commande (42) commande la bobine haute pression (24, 124) pour avoir une vitesse de rotation ayant la valeur corrigée en température au moins sensiblement constante qui s'étend de zéro à une puissance maximale disponible depuis le moteur à turbine à gaz (10, 110).

8. Moteur à turbine à gaz selon la revendication 5, 6 ou 7, dans lequel l'au moins un dispositif de commande (42) est conçu pour commander la rotation des bobines haute et basse pression (24, 124 ; 20, 120) d'une manière indépendante.

Fig. 1

*Fig. 2*

Power

Speed

*Fig. 3* (PRIOR ART)

Ng

Power

Speed

*Fig. 4*

Ng'

*Fig. 5*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0363301 A
- EP 2143908 A
- EP 0279487 B
- DE 2654864 A
- GB 1313841 A
- GB 2387415 A
- US 4890977 A